# EUROPÄISCHE PATENTSCHRIFT

(11) **EP 2 477 013 B1**
(45) Veröffentlichungstag und Bekanntmachung des Hinweises auf die Patenterteilung: **19.11.2014**
(21) Anmeldenummer: 11151140.8
(22) Anmeldetag: 17.01.2011
(51) Int. Cl.: G01F 23/24, H01H 35/18, G01D 11/24

(54) **Grenzwertgeber mit geschlitzter Schutzhülse aus Kunststoff**
Limit monitor with slit protective lining made of plastic
Capteur de valeur limite doté d'une enveloppe de sécurité à fente en matière synthétique

(43) Veröffentlichungstag der Anmeldung: 18.07.2012
(73) Patentinhaber: AFRISO-Euro-Index GmbH, 74363 Güglingen (DE)
(72) Erfinder: Heinz, Thomas, 74374 Zaberfeld (DE)
(74) Vertreter: Kohler Schmid Möbus

(56) Entgegenhaltungen:
- DE-A1- 1 598 438
- DE-A1- 2 605 769
- DE-A1- 3 232 333
- GOK Regler: "Technisches Datenblatt "Grenzwertgeber (GWG) für Heizölverbraucheranlagen"", , 28. Juli 2010 (2010-07-28), XP002647331, Gefunden im Internet: URL:http://www.gok-online.de/assets/web/do wnload/technische%20dokumentation/db_grenz wertgeber_11.pdf [gefunden am 2011-07-04]

## Beschreibung

Die Erfindung betrifft einen Grenzwertgeber gemäß Oberbegriff von Anspruch 1.

Ein derartiger Grenzwertgeber mit geschlitzter Hülse ist beispielsweise durch GOK Regler: Technisches Datenblatt "Grenzwertgeber (GWG) für Heizölverbaucheranlagen", bekannt geworden.

Der Grenzwertgeber ist eine im Flüssigkeitstank fest eingebaute Sonde, die als Sicherheitseinrichtung für Erdtanks und oberirdische Tankanlagen mit einem Fassungsvermögen über 1000 l in Deutschland gesetzlich vorgeschrieben ist. Der Grenzwertgeber bildet gemeinsam mit einer am Tankwagen vorgesehenen Abfüllsicherung eine Überfüllsicherung. Sobald der Tankwagenfahrer den Grenzwertgeber mittels eines Kabels an den Tankwagen angeschlossen hat, wird ein unten am Sondenrohr angebrachter Kaltleiter durch die Niederstromspannung des Tankwagens aufgeheizt. Wenn die vorgeschriebene Temperatur erreicht ist, gibt der Grenzwertgeber die Pumpe frei, und der Fahrer kann den Flüssigkeitstank befüllen. Sobald der Füllstand im Flüssigkeitstank eine vorgeschriebene Höchstgrenze erreicht hat, taucht der Grenzwertgeber in das Heizöl ein. Der Kaltleiter wird abrupt abgekühlt und verringert damit plötzlich den elektrischen Widerstand. Der elektrische Strom steigt, und die Abfüllsicherung des Tankwagens unterbricht automatisch den Befüllvorgang.

Da die Entlüftung am Flüssigkeitstank oftmals relativ nahe am Grenzwertgeber angebracht ist, strömt die entweichende Luft zwangsläufig am Kaltleiter des Grenzwertgebers vorbei. Um den Kaltleiter beim Befüllvorgang vor Zugluft zu schützen und Fehlabschaltungen zu verhindern, ist der Kaltleiter von einer luftdicht auf das Sondenrohr aufgeschobenen Schutzhülse aus Kunststoff umgeben. Damit beim Befüllvorgang Luft aus der Schutzhülse herausströmen und die Flüssigkeit den Kaltleiter erreichen kann, hatten früher die Schutzhülsen oberhalb des Kaltleiters seitliche Bohrungen in der Hülsenwand. Im Laufe der Jahre konnten diese seitlichen Bohrungen allerdings durch Pilzwachstum verkleben, so dass die Flüssigkeit den heißen Kaltleiter nicht erreicht hat und das Abschaltsignal nicht ausgelöst wurde. In der Vergangenheit ist es aus diesem Grund zu etlichen Überfüllschäden gekommen

Bei heutigen Grenzwertgebern sind daher die seitlichen Bohrungen der Schutzhülse durch einen unten offenen Längsschlitz in der Hülsenwand ersetzt. Bei einer solchen längsgeschlitzten Kunststoffhülse ist das Pilzwachstum zwar deutlich reduziert, aber nicht vollständig verhindert.

Aufgabe der Erfindung ist es, bei einem Grenzwertgeber der eingangs genannten Art das Pilzwachstum noch bewirkungsvoller zu verhindern.

Diese Aufgabe wird erfindungsgemäß durch einen Grenzwertgeber mit den Merkmalen von Anspruch 1 gelöst.

Durch die erfindungsgemäße Metallschicht wird das Pilzwachstum in dem Längsschlitz der Kunststoffhülse verhindert und dem Kaltleiter außerdem keine Wärme entzogen, wie dies beispielsweise bei einer Schutzhülse aus Vollmetall der Fall ist. Solche Schutzhülsen aus Vollmetall haben bei tiefen Temperaturen zudem den Nachteil, dass aufgrund der Wärmeleitfähigkeit der Metallmasse dem Kaltleiter beim Aufheizprozess wesentlich mehr Wärme entzogen wird, wie dies bei einer Schutzhülse aus Kunststoff der Fall ist. Dadurch kann es bei solchen Schutzhülse aus Vollmetall vorkommen, dass die Solltemperatur des Kaltleiters nicht in der vorgegebenen Zeit erreicht wird und der Schaltverstärker des Tankwagens den Befüllvorgang deshalb nicht freigibt.

In einer bevorzugten Ausführungsform der Erfindung ist die Metallschicht durch eine metallische Oberflächenbeschichtung der Kunststoffhülse gebildet, beispielsweise durch Verchromen oder Vernickeln der Kunststoffhülse.

In einer anderen bevorzugten Ausführungsform der Erfindung ist die Metallschicht entweder durch ein metallisches Schutzteil, das die Schlitzwände der Kunststoffhülse abdeckt und beispielsweise als Einlegeteil in die Kunststoffhülse eingespritzt ist, oder durch eine Blechhülse aus z.B. verzinktem Stahl, Aluminium, Messing oder auch aus Edelstahl gebildet. Die Kunststoffhülse kann an die Blechhülse angespritzt oder darin eingeschoben werden. Dabei weist die Blechhülse bevorzugt einen sich mit dem Längsschlitz der Kunststoffhülse deckenden Längsschlitz mit umgebogenen Rändern auf, welche zumindest die Schlitzwände der Kunststoffhülse abdecken und insbesondere umgreifen. Der Längsschlitz der Kunststoffhülse kann dann aufgrund der metallenen Schlitzwände nicht durch Pilzwachstum zuwachsen. Durch die innenliegende Kunststoffhülse wird außerdem die Wärmeabfuhr gering gehalten.

Alternativ oder zusätzlich zu einer Metallschicht kann der Längsschlitz der Kunststoffhülse an seinem geschlossenen, oberen Schlitzende verbreitert sein, um bei einem Pilzbefall das Risiko eines Verschlusses des Längsschlitzes durch Pilzwachstum weiter zu reduzieren.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

In der Zeichnung zeigen:
- Fign. 1a-1c: den erfindungsgemäßen Grenzwertgeber in einer perspektivischen Ansicht (Fig. 1a), eine vergrößerte Detailansicht (Fig. 1b) einer in Fig. 1a gezeigten Schutzhülse und schematisch einen Querschnitt (Fig. 1c) der Schutzhülse entsprechend lc-lc in Fig. 1b; und
- Fign. 2, 3: ein weiteres Ausführungsbeispiel des erfindungsgemäßen Grenzwertgebers in einer teilaufgebrochenen Explosionsdarstellung (Fig. 2) und im montierten Zustand (Fig. 3).

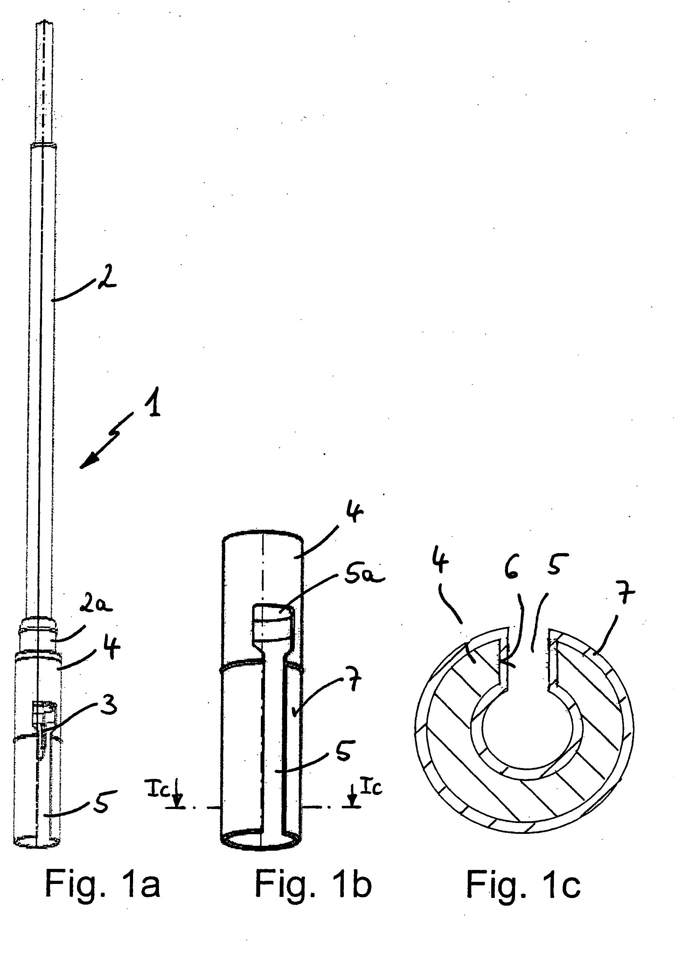

Der in **Fig. 1a-1c** gezeigte Grenzwertgeber 1 wird als Sicherheitseinrichtung in einen Flüssigkeitstank (nicht gezeigt) eingebaut.

Der Grenzwertgeber 1 umfasst ein in Einbaulage vertikales Sondenrohr **2**, einen am unteren Sondenrohrende **2a** angeordneten Flüssigkeitssensor in Form eines elektrischen Kaltleiters **3**, sowie eine sich an das untere Sondenrohrende 2a luftdicht anschließende, nach unten offene Kunststoffhülse **4**, die den Kaltleiter 3 umgibt. Die Kunststoffhülse 4 ist mit einer mantelseitigen Öffnung in Form eines nach unten offenen Längsschlitzes **5** ausgebildet, der sich nach oben bis oberhalb des Kaltleiters 3 erstreckt.

Die gesamte Oberfläche der Kunststoffhülse 4, also ihre Außenseite, Innenseite, untere Stirnseite sowie die den Längsschlitz 5 definierenden Kanten **6**, ist mit einer metallischen Oberflächenbeschichtung **7** versehen, z.B. durch Verchromen oder Vernickeln der Kunststoffhülse 4.

Der nach unten offene Längsschlitz 5 der Kunststoffhülse 4 ist an seinem geschlossenen, oberen Schlitzende **5a** verbreitert, um bei einem Pilzbefall das Risiko eines Verschlusses des Längsschlitzes durch Pilzwachstum weiter zu reduzieren.

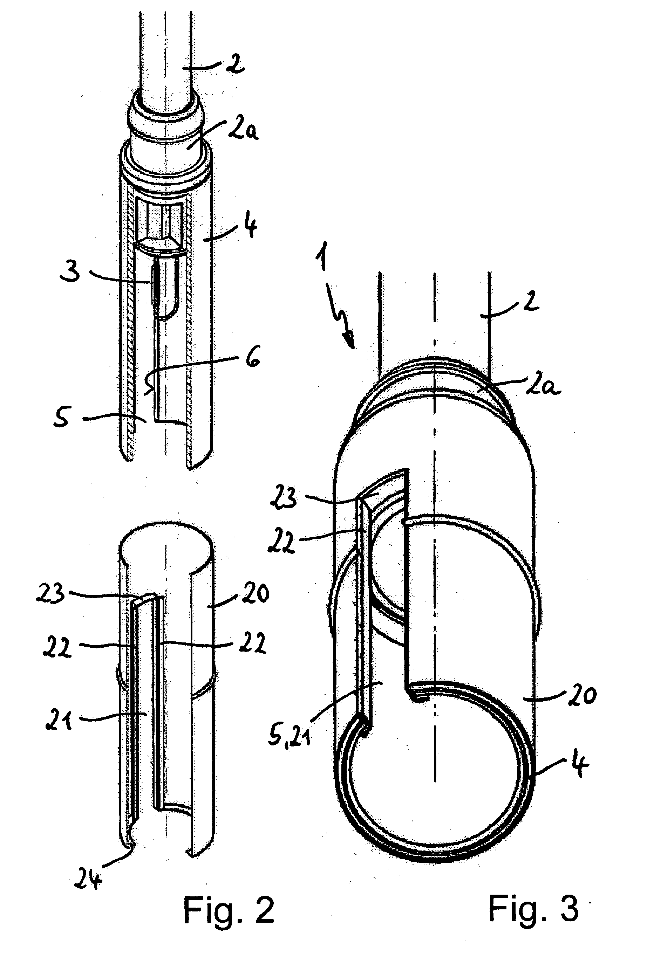

In **Fign. 2, 3** ist die Kunststoffhülse 4 außenseitig durch eine Metallschicht in Form einer Blechhülse **20** abgedeckt, die auf das untere Ende der Kunststoffhülse 4 aufgeschoben wird. Die Blechhülse 20 weist einen sich mit dem Längsschlitz 5 der Kunststoffhülse 4 deckenden Längsschlitz **21** mit nach innen umgebogenen Längsrändern **22** auf, welche die Längskanten 6 des Längsschlitzes 5 der Kunststoffhülse 4 umgreifen und dadurch abdecken. Im gezeigten Ausführungsbeispiel sind auch die Querkante des Längsschlitzes 5 und die untere Stirnfläche der Kunststoffhülse 4 jeweils von einem umgebogenen Rand **23**, **24** der Blechhülse 20 umgriffen und dadurch abgedeckt. In Fig. 2b ist der um die untere Stirnfläche der Kunststoffhülse 4 umgebogene Rand 24 ausgelassen. Aufgrund der metallenen Kantenflächen der Blechhülse 20 kann der Längsschlitz 5 der Kunststoffhülse 4 nicht durch Pilzwachstum zuwachsen. Alternativ zum Aufschieben kann die Kunststoffhülse 4 auch an die Blechhülse 20 angespritzt sein.

## Patentansprüche

1. Grenzwertgeber (1) zum Einbau in einen Flüssigkeitstank,
mit einem in Einbaulage vertikalen Sondenrohr (2), mit einem am unteren Sondenrohrende (2a) angeordneten elektrischen Kaltleiter (3) und mit einer sich an das untere Sondenrohrende (2a) luftdicht anschließenden, nach unten offenen Kunststoffhülse (4), die den Kaltleiter (3) umgibt und auf Höhe oder oberhalb des Kaltleiters (3) einen nach unten offenen Längsschlitz (5) aufweist,
**dadurch gekennzeichnet,**
**dass** zumindest die den Längsschlitz (5) definierenden Schlitzwände der Kunststoffhülse (4) mit einer Metallschicht (7, 20) abgedeckt sind.

2. Grenzwertgeber nach Anspruch 1, **dadurch gekennzeichnet, dass** zumindest der an den Längsschlitz (5) angrenzende Randbereich der Außen- und/oder Innenseite der Kunststoffhülse (4), insbesondere die gesamte Außen- und/oder Innenseite der Kunststoffhülse (4), mit der Metallschicht (7, 20) abgedeckt ist.

3. Grenzwertgeber nach Anspruch 1 oder 2, **dadurch gekennzeichnet, dass** auch die untere Stirnseite der Kunststoffhülse (4) mit der Metallschicht (7, 20) abgedeckt ist.

4. Grenzwertgeber nach einem der Ansprüche 1 bis 3, **dadurch gekennzeichnet, dass** die Metallschicht (7) durch eine metallische Oberflächenbeschichtung der Kunststoffhülse (4) gebildet ist.

5. Grenzwertgeber nach einem der Ansprüche 1 bis 3, **dadurch gekennzeichnet, dass** die Metallschicht (20) durch ein metallisches Schutzteil gebildet ist, das insbesondere als Einlegeteil in die Kunststoffhülse (4) eingespritzt ist.

6. Grenzwertgeber nach einem der Ansprüche 1 bis 3, **dadurch gekennzeichnet, dass** die Metallschicht (20) durch eine Blechhülse gebildet ist, die auf oder in der Kunststoffhülse (4) angeordnet ist und einen sich mit dem Längsschlitz (5) der Kunststoffhülse (4) deckenden Längsschlitz (21) mit umgebogenen Rändern (22, 23, 24) aufweist, welche zumindest die Schlitzwände (6) der Kunststoffhülse (4) abdecken und insbesondere umgreifen.

7. Grenzwertgeber nach Anspruch 6, **dadurch gekennzeichnet, dass** die Blechhülse (20) einen umgebogenen unteren Rand (24) aufweist, der die untere Stirnseite der Kunststoffhülse (4) abdeckt.

8. Grenzwertgeber gemäß Oberbegriff von Anspruch 1, insbesondere nach einem der vorhergehenden Ansprüche, **dadurch gekennzeichnet, dass** der Längsschlitz (5) an seinem geschlossenen, oberen Schlitzende (5a) verbreitert ist.

## Claims

1. Limit switch (1) for installation into a liquid tank, comprising a probe tube (2) which is in a vertical position in the installed state, a PTC thermistor (3) which is arranged at the lower probe tube end (2a), and a plastic sleeve (4) which adjoins the lower probe tube end (2a) in an air-tight manner, is open to the bottom, surrounds the PTC thermistor (3) and has a longitudinal slot (5) which is provided at the same level as or above the PTC thermistor (3) and is open to the bottom,
**characterized in that**
at least the slot walls of the plastic sleeve (4) that define the longitudinal slot (5) are covered by a metal layer (7, 20).

2. Limit switch according to claim 1, **characterized in that** at least the edge region of the outer and/or inner side of the plastic sleeve (4) that borders the longitudinal slot (5), in particular, the overall outer and/or inner side of the plastic sleeve (4) is covered by the metal layer (7, 20).

3. Limit switch according to claim 1 or 2, **characterized in that** the lower front side of the plastic sleeve (4) is also covered by the metal layer (7, 20).

4. Limit switch according to any one of the claims 1 to 3, **characterized in that** the metal layer (7) is formed by a metallic surface coating of the plastic sleeve (4).

5. Limit switch according to any one of the claims 1 to 3, **characterized in that** the metal layer (20) is formed by a metallic protection part which is injection-molded into the plastic sleeve (4), in particular, in the form of an insert.

6. Limit switch according to any one of the claims 1 to 3, **characterized in that** the metal layer (20) is formed by a sheet metal sleeve which is arranged on or in the plastic sleeve (4) and has a longitudinal slot (21) that coincides with the longitudinal slot (5) of the plastic sleeve (4) and has bent edges (22, 23, 24) which cover and, in particular, grip around at least the slot walls (6) of the plastic sleeve (4).

7. Limit switch according to claim 6, **characterized in that** the sheet metal sleeve (20) has a bent lower edge (24) which covers the lower front side of the plastic sleeve (4).

8. Limit switch according to the pre-characterizing part of claim 1, in particular, according to any one of the preceding claims, **characterized in that** the longitudinal slot (5) is widened at its closed upper slot end (5a).

## Revendications

1. Indicateur (1) de valeurs limites, conçu pour être intégré dans un réservoir de liquide,
comprenant une sonde tubulaire (2) verticale en position intégrée, une thermistance électrique (3) disposée à l'extrémité inférieure (2a) de ladite sonde tubulaire, et une douille (4) en matière plastique ouverte vers le bas, qui se rattache à ladite extrémité inférieure (2a) de la sonde tubulaire, avec étanchéité à l'air, entoure ladite thermistance (3) et présente une fente longitudinale (5) ouverte vers le bas, à la hauteur de ladite thermistance (3) ou au-dessus de cette dernière,
**caractérisé par le fait**
**qu'**au moins les parois incisées de la douille (4) en matière plastique, qui définissent la fente longitudinale (5), sont recouvertes d'une couche de métal (7, 20).

2. Indicateur de valeurs limites selon la revendication 1, **caractérisé par le fait qu'**au moins la région marginale de la (des) face(s) extérieure et/ou intérieure de la douille (4) en matière plastique, limitrophe de la fente longitudinale (5), et notamment l'intégralité de ladite (desdites) face(s) extérieure et/ou intérieure de la douille (4) en matière plastique, sont recouvertes de la couche de métal (7, 20).

3. Indicateur de valeurs limites selon la revendication 1 ou 2, **caractérisé par le fait que** la face extrême inférieure de la douille (4) en matière plastique est pareillement recouverte de la couche de métal (7, 20).

4. Indicateur de valeurs limites selon l'une des revendications 1 à 3, **caractérisé par le fait que** la couche de métal (7) est formée par un revêtement métallique de la surface de la douille (4) en matière plastique.

5. Indicateur de valeurs limites selon l'une des revendications 1 à 3, **caractérisé par le fait que** la couche de métal (20) est formée par une partie protectrice métallique qui est notamment intégrée par injection dans la douille (4) en matière plastique, en tant que partie incorporée.

6. Indicateur de valeurs limites selon l'une des revendications 1 à 3, **caractérisé par le fait que** la couche de métal (20) est formée par une douille en tôle qui, implantée sur ou dans la douille (4) en matière plastique, est munie d'une fente longitudinale (21) coïncidant avec la fente longitudinale (5) de ladite douille (4) en matière plastique et dotée de bords recourbés (22, 23, 24) qui recouvrent, et notamment ceinturent au moins les parois incisées (6) de ladite douille (4) en matière plastique.

7. Indicateur de valeurs limites selon la revendication 6, **caractérisé par le fait que** la douille (20) en tôle présente un bord inférieur (24) recourbé, qui recouvre la face extrême inférieure de la douille (4) en matière plastique.

8. Indicateur de valeurs limites conforme au préambule de la revendication 1, notamment selon l'une des revendications précédentes, **caractérisé par le fait que** la fente longitudinale (5) est élargie à son extrémité supérieure (5a) fermée.
